# FASCICULE DE BREVET EUROPEEN

(11) **EP 3 307 475 B1**
(45) Date de publication et mention de la délivrance du brevet: **30.09.2020**
(21) Numéro de dépôt: 16763938.4
(22) Date de dépôt: 09.06.2016
(51) Int. Cl.: B23Q 1/01, B23Q 17/22, B23Q 17/24

(54) **PROCÉDÉ ET SYSTÈME D'USINAGE DE PIÈCE COMPORTANT UN MODULE DE MISE AU POINT**
VERFAHREN UND WERKSTÜCKBEARBEITUNGSSYSTEM MIT EINEM AUFBAUMODUL
METHOD AND WORKPIECE MACHINING SYSTEM COMPRISING A SETTING-UP MODULE

(30) Priorité: 11.06.2015 CH 8312015
(43) Date de publication de la demande: 18.04.2018
(73) Titulaire: Watch Out SA, 1204 Genève (CH)
(72) Inventeur: JACOT, Philippe, 2022 Bevaix (CH); LAPORTE, Sébastien, 74300 Thyez (FR)
(74) Mandataire: P&TS SA (AG, Ltd.)
(86) Numéro de dépôt international: PCT/IB2016/053380
(87) Numéro de publication internationale: WO 2016/199044

(56) Documents cités:
- DE-A1- 1 602 821
- DE-U1- 20 013 242
- FR-A1- 2 768 072
- US-A- 3 555 690
- US-A- 3 867 763
- US-A- 4 240 207
- US-A- 4 880 220
- US-A- 5 595 377

## Description

### Domaine technique

La présente invention concerne un procédé et un système d'usinage de pièce comportant un module de mise au point et au moins un module d'usinage destiné à la production.

### Etat de la technique

La fabrication de pièces au moyen de modules d'usinage (machines-outils), notamment de décolleteuses, de tours automatiques, de fraiseuses et de machines transferts, comporte typiquement trois phases distinctes :

Dans une première phase de mise au point (ou préréglage), l'opérateur (par exemple un décolleteur) définit et teste sur un module d'usinage le plan d'usinage, c'est-à-dire la succession d'opérations et de déplacements d'axes nécessaires pour obtenir la pièce à usiner désirée. L'opérateur veille par exemple à obtenir le plan d'usinage le plus efficace possible, c'est-à-dire celui qui permet d'usiner une pièce donnée avec un minimum d'opérations et en évitant les collisions entre outils ou avec la pièce. Il choisit les outils à employer, et vérifie la qualité des pièces obtenues, par exemple les états de surface, le respect des tolérances, etc.

Dans une deuxième phase de production, une série de pièces sont produites sur le module d'usinage préréglé, avec les paramètres définis lors de la mise au point. Cette phase est la seule phase productive ; elle est souvent effectuée 24h sur 24, le module d'usinage étant alimenté en matière brute au moyen d'un ravitailleur ou d'un chargeur de lopins (pièces brutes).

Il arrive que la production d'une série de pièces soit interrompue, par exemple pour produire un autre type de pièces sur le même module d'usinage, pour la maintenance de la machine, etc, puis reprise ultérieurement. Dans un tel cas, une phase de mise en train est nécessaire pour appliquer les paramètres définis précédemment lors de la mise au point. Cette mise en train est plus rapide que la mise au point.

La mise au point se fait généralement sur le module d'usinage également destiné à la production, afin d'assurer que cette production soit effectuée avec les paramètres préréglés permettant d'obtenir les résultats testés lors de la mise au point. Il en résulte une interruption de la production (c'est-à-dire un temps mort) et une immobilisation de la machine de production pendant la durée de la mise au point.

Le test des paramètres d'usinage préréglés lors de la mise au point nécessite des équipements de test spécialisés, par exemple des capteurs, des caméras vidéo, etc, afin de mesurer la qualité des pièces produites. Ces équipements de test renchérissent le prix du module d'usinage. Dans le cas d'un parc avec de nombreux modules d'usinage, chaque module doit être équipé de ses propres équipements de test, au moins pour chaque mise au point. Il est certes possible de sortir les pièces du module d'usinage afin de les tester en dehors, mais ce transfert ralentit encore la phase de mise au point et la durée d'immobilisation non productive du module. D'autre part, elle ne permet pas de mesurer facilement les caractéristiques de la pièce au cours d'étapes intermédiaires de l'usinage.

Différentes solutions ont donc été proposées dans l'art antérieur afin de réduire la durée de cette phase de mise au point ou celle de la mise en train.

DE1602821A1 décrit par exemple un dispositif externe de mise au point. Ce dispositif permet de faire une mise au point en dehors de la machine-outil, et de tester les paramètres obtenus avant la phase de production sur la machine de production. La mise au point est effectuée avec un outil monté sur un porte-outil amovible qui est ensuite transféré sur la machine de production, afin de s'assurer que la qualité de la production ne soit pas affectée par un changement d'outil ou de positionnement des outils dans leur porte outil.

US3282138A décrit une machine-outil à contrôle numérique. Un dispositif numérique de positionnement permet de corriger le positionnement d'un porte-outil amovible, en enregistrant les paramètres de positionnement requis sur des rubans perforés. Cette solution souffre des mêmes problèmes que le document ci-dessus et permet uniquement de corriger les différences de positionnement des outils.

US4776247 décrit un autre circuit numérique permettant de reproduire lors de la production la position des outils prédéterminée lors de la mise au point, et donc de réduire le temps de mise en train.

US3625097A décrit un procédé de préréglage d'outils par rapport à leur porte-outil. Le procédé met en oeuvre un dispositif de mise au point externe avec des porte-outils amovibles qui peuvent être ensuite transférés sur la machine-outil de production. La machine-outil reproduit correctement le positionnement entre porte-outils.

US3555690A et US4240207 concernent un dispositif de simulation permettant le préréglage d'une machine-outil, mettant en oeuvre un dispositif de mise au point externe.

US3867763A, FR2768072, US5595377 et US4880220 décrivent un dispositif de préréglage de machine-outil, mettant en oeuvre un dispositif de mise au point externe avec des porte-outils amovibles.

DE202013002678U1 décrit une machine de production avec une table de production équipée d'un convoyeur portant plusieurs porte-outils aptes à venir chacun leur tour se positionner dans une série des portes de traitement adjacents.

DE102007042288A1 se rapporte à une machine-outil dont le châssis forme un cadre supportant un porte-pièce et un ou plusieurs porte-outils. Il existe des systèmes pour assurer le bon positionnement du porte-pièce et du ou des porte-outils sur le châssis.

DE10 2005 047250 décrit une ligne de production de pièces avec plusieurs cellules d'usinage alignées et un dispositif de transport pour transporter la pièce à usiner. Chaque cellule d'usinage comporte des portes-outils et des portes-pièces. Il existe une compensation de position relative entre le porte-outil et le porte-pièce qui lui est

On peut encore citer DE 200 13 242 U1 décrivant un dispositif optique pour le réglage des outils, des pièces ou de systèmes de mesure sur les machines-outil.

Ces différentes solutions permettent ainsi de mettre au point et de tester un plan d'usinage hors du module d'usinage destiné à la production. Elles permettent aussi de tester les outils et leur montage sur le porte-outil, et de s'assurer que le montage précis des outils sur leur porte-outil soit reproduit lors de la production. Ces solutions ne permettent malgré tout pas d'assurer une reproductibilité parfaite des résultats sur la machine de production ; en effet, la qualité d'usinage dépend aussi des caractéristiques et du positionnement du porte-pièce sur chaque module.

### Bref résumé de l'invention

Un but de la présente invention est de proposer un système d'usinage et un module de mise au point externe qui soient exempts des limitations de l'art antérieur.

Selon l'invention, ces buts sont atteints notamment au moyen d'un système d'usinage de pièces comprenant un module d'usinage destiné à la production de pièces et un module de mise au point,
le module de mise au point comprenant au moins un premier dispositif de fixation de porte-outil pour fixer un porte-outil de manière amovible et au moins un premier dispositif de fixation de support de pièce pour fixer un support de pièce de manière amovible, et un premier dispositif de contrôle de positionnement pour contrôler le positionnement dudit au moins un porte-outil par rapport audit support de pièce,
le module d'usinage comprenant au moins un deuxième dispositif de fixation de porte-outil pour fixer un porte-outil de manière amovible et au moins un deuxième dispositif de fixation de support de pièce pour fixer un support de pièce de manière amovible, et un deuxième dispositif de contrôle de positionnement permettant de vérifier le positionnement dudit au moins un porte-outil par rapport audit support de pièce,
de manière à ce que le porte-outil et le support de pièce puissent tous deux être transférés après la mise au point depuis le module de mise au point vers le module d'usinage.

Cette solution présente notamment l'avantage par rapport à l'art antérieur de permettre le transfert non seulement du porte-outil, mais aussi du support de pièce, entre le module de mise au point et le module d'usinage. On s'assure ainsi que l'usinage sera effectué avec le porte-outil et avec le support de pièce préalablement testés lors de la mise au point; les éventuels défauts du support de pièce, par exemple des imprécisions de positionnement, de concentricité etc, peuvent ainsi être mesurés lors de la mise au point, et corrigés ou compensés lors de la production.

Cette solution permet aussi de faire une mise au point en temps masqué, sur un module de mise au point externe, sans bloquer le module d'usinage destiné à la production.

Dans un mode de réalisation préférentiel, le module de mise au point comprend une première référence de positionnement pour contrôler le positionnement d'au moins un support d'outil par rapport au support de pièce. Le module d'usinage comprend quant à lui une deuxième référence de positionnement permettant de vérifier le positionnement d'au moins un support d'outil par rapport au support de pièce. On peut ainsi compenser des erreurs de positionnement du porte-outil, ou de chaque porte-outil, par rapport à la pièce lors de la mise au point sur le module de mise au point et lors de l'usinage.

Le porte-outil peut être fixé de manière amovible sur un chariot (peigne). A cet effet, il peut par exemple comporter des moyens de fixation amovibles, par exemple une ou des goupilles, ou des portions, par exemple des trous ou des surfaces de référence, aptes à coopérer avec le chariot mobile.

Le porte outil peut comporter plusieurs outils fixés de manière amovible.

La référence de positionnement prévue sur le module d'usinage permet de garantir un positionnement relatif du porte-outil et du support de pièce identique à celui appliqué lors de la mise au point sur le module de mise au point et/ou de compenser des différences de positionnements. On contrôle ainsi le positionnement relatif entre le porte-outil et le support de pièce, et donc le positionnement relatif entre la pièce et l'outil, indépendamment du positionnement par rapport au bâti du module d'usinage.

Le système de positionnement sur le module de mise au point peut être agencé pour permettre de mesurer la distance entre la position du porte-outil et une référence liée au support de pièce, et pour mémoriser cette distance. De la même façon, la direction effective de déplacement du porte-outil (par exemple lorsqu'une consigne de déplacement dans une direction donnée est donnée) peut être mesurée et mémorisée.

On parle alors de goupillage du support de pièce avec le porte-outil : ces deux éléments sont toujours alignés et positionnés de manière précise l'un par rapport à l'autre, à la même distance et avec la même orientation, aussi bien sur le module de mise au point que sur le module d'usinage.

De la même façon, dans le module d'usinage, la position et la direction de déplacement du porte-outil dans un référentiel lié au support de pièce sont mesurées et compensés avec les valeurs de référence déterminées sur le module de mise au point. D'éventuelles différences de positionnement et/ou d'orientation sont mesurées et compensées par des mouvements correspondants du chariot porte-outil lors de l'usinage.

Les dispositifs de contrôle de positionnement permettent de vérifier le positionnement du porte-outil et du support de pièce dans un seul plan X-Y, et éventuellement la direction de déplacement Thêta dans ce plan. On évite ainsi la difficulté de positionnement et d'orientation selon l'axe Z, généralement moins sensible. Il en résulte un dispositif plus économique et plus simple à aligner.

Dans un autre mode de réalisation, lorsqu'un positionnement précis des outils et de la pièce selon Z est également nécessaire, le dispositif de contrôle de positionnement peut être prévu pour permettre également un positionnement précis dans un ou plusieurs plans incluant l'axe Z.

Les premières et deuxièmes références de positionnement peuvent être constituées par des cibles optiques. L'alignement entre ces cibles superposées garantit le positionnement correct du porte-outil avec le support de pièce. Le système de contrôle de positionnement peut comprendre une caméra filmant les cibles superposées, et un module informatique d'analyse d'image.

D'autres types de cibles et d'autres systèmes de contrôle de positionnement peuvent être mis en oeuvre, y compris des systèmes basés sur un capteur matriciel, des systèmes capacitifs, inductifs, résistifs ou mécaniques par exemple.

Le dispositif de contrôle de positionnement peut être amovible et lié au porte-outil et au support de pièce, respectivement.

Le dispositif de contrôle de positionnement peut être fixe et lié au bâti du module de mise au point respectivement du module d'usinage.

Le dispositif de contrôle de positionnement peut être en partie fixe et en partie amovible et lié au porte-outil et au support de pièce, respectivement.

Dans le cas d'un système optique, la mesure peut se faire en vérifiant la position de pièces immergées dans un liquide, par exemple dans l'huile. On évite ainsi les erreurs de mesures dues à d'éventuelles projections d'huile de coupe ou à la présence de copeaux ou de saletés.

Le module de mise au point peut comporter une caméra ou un capteur de haute résolution dont le module d'usinage est dépourvu, afin de mettre au point l'usinage sur ce module de mise au point, de vérifier la qualité de l'usinage obtenu, et d'économiser l'installation de tels capteurs de haute résolution sur toutes les machines-outils d'un parc.

Le support de matière peut être un canon de décolleteuse.

Le support de matière peut être une pince ou un mandrin.

Le support de matière peut être une palette ou un porte-palette.

Il est aussi possible d'intégrer ou de fixer la cible sur la pièce à usiner.

Dans un module de mise au point pour la mise au point d'un procédé d'usinage, de préférence, un tel de mise au point comprend :
- au moins un premier dispositif de fixation de porte-outil pour fixer un porte-outil de manière amovible ;
- au moins un premier dispositif de fixation de support de pièce pour fixer un support de pièce de manière amovible ;
le positionnement dudit porte-outil par rapport audit support de pièce étant contrôlé.

L'invention a aussi pour objet un procédé d'usinage de pièces à l'aide d'un module d'usinage pour la production de pièces et d'un module de mise au point, comprenant :
mise au point du procédé d'usinage au moyen du module de mise au point;
transfert d'au moins un porte-outil et d'au moins un support de pièce depuis le module de mise au point vers le module d'usinage;
usinage de pièces sur ledit module d'usinage au moyen dudit support de pièce et dudit porte-outil, et une étape de vérification du positionnement relatif du support de pièce et du ou des porte-outils sur le module de mise au point et sur le module d'usinage, et ce afin de garantir sur le module d'usinage un positionnement entre ledit au moins un porte-outil et ledit support de pièce identique à celui appliqué entre ledit au moins un porte-outil et ledit support de pièce lors de la mise au point sur le module de mise au point.

### Brève description des figures

Des exemples de mise en oeuvre de l'invention sont indiqués dans la description illustrée par les figures annexées dans lesquelles :
- La figure 1 illustre une vue en coupe d'un module d'usinage selon un mode de réalisation de l'invention.
- La figure 2 illustre une vue en perspective d'un module de mise au point selon un mode de réalisation de l'invention.
- La figure 3 illustre schématiquement le transfert du porte-outil et du support de pièce entre un module de mise au point et un module d'usinage.
- La figure 4 illustre schématiquement le montage des porte-outils et du support de pièce sur un module de mise au point ou sur un module d'usinage.
- La figure 5 illustre une vue en coupe un exemple de système de contrôle de positionnement selon un mode de réalisation de l'invention.
- La figure 6 illustre schématiquement un exemple de système de contrôle de positionnement selon un mode de réalisation de l'invention.
- La figure 7 illustre schématiquement un système de contrôle de positionnement selon un mode de réalisation de l'invention, l'illumination étant du côté opposé à la caméra par rapport aux cibles.
- La figure 8 illustre schématiquement un système de contrôle de positionnement selon un mode de réalisation de l'invention, l'illumination étant du même côté que la caméra par rapport aux cibles.

### Exemple(s) de mode de réalisation de l'invention

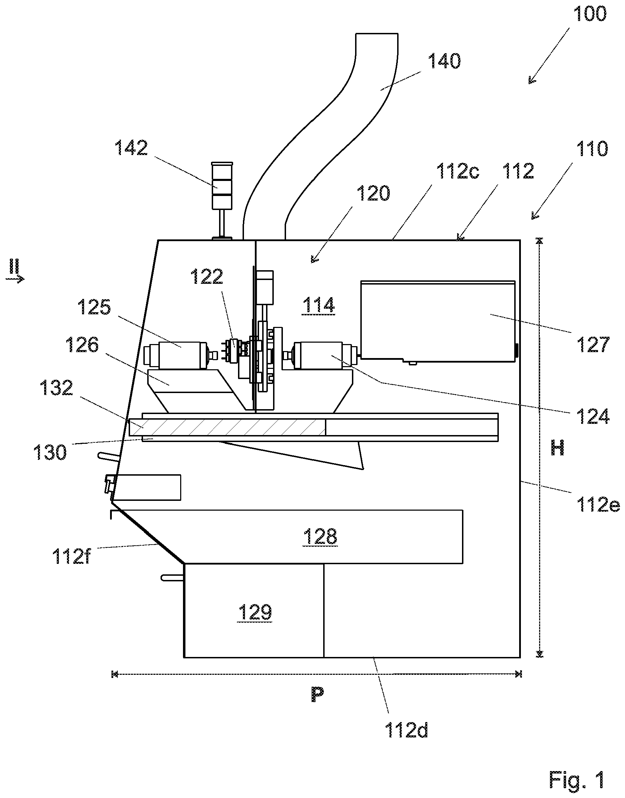

Le module d'usinage 110 illustré sur la figure 1 forme un bloc compact, délimité par un capot de protection 112 constituant une enveloppe fermée délimitant une enceinte 114 pouvant être rendue relativement étanche. Ce capot de protection 112 comporte deux parois latérales 112a et 112b verticales parallèles entre elles, une paroi supérieure 112c horizontale et parallèle à une paroi inférieure liée au bâti 112d, une paroi arrière 112e verticale, et une paroi avant 112f à plusieurs pans comportant une porte frontale.

Une fenêtre dans la paroi avant 112f permet de visualiser l'enceinte 114 renfermant notamment un ensemble d'usinage 120. Cet ensemble d'usinage 120 comporte au moins un porte-outil 122, une broche 124 et une contre-broche 125. Le ou les porte-outils 122 sont montés de manière amovible sur un chariot ou peigne motorisé mobile, comme on le verra.

L'ensemble d'usinage 120 est monté sur un chariot mobile 130. Sur la figure, ce chariot mobile 130 se présente sous la forme d'un tiroir. De préférence, le chariot 130 forme un réceptacle apte à récupérer tout liquide de lubrification, notamment de l'huile, et les copeaux de matière résultant de l'usinage d'une pièce par l'ensemble d'usinage. Pour permettre le mouvement d'avancée hors de l'enceinte 114 et le mouvement de recul dans l'enceinte de ce chariot mobile 130, ce dernier est monté sur des moyens de guidage 132. En particulier, ces moyens de guidage 132 peuvent se présenter sous la forme de rails.

L'ensemble d'usinage 120 est disposé sur une base de support 126, sur laquelle sont montés la broche 124 et la contre-broche 125, ainsi que le ou les porte-outils amovibles 122. La base de support 126 est reçue directement sur le chariot mobile 130. De cette façon, on comprend qu'il est possible de changer un ensemble d'usinage 120 complet d'un module d'usinage, en séparant simplement la base de support 126 du chariot mobile 130, et en y plaçant une nouvelle base de support 126 équipée d'un autre ensemble d'usinage 120.

Le module d'usinage 110 comporte encore une armoire électrique, non représentée sur la figure, située par exemple sur la paroi arrière 112e. Cette armoire électrique est disposée dans l'enceinte 114, ou à l'extérieur de l'enceinte 114. L'enceinte 114 comporte également un bac à copeaux 128, sous le chariot mobile 130, et un bac à huile 129, sous le bac à copeaux 128. Afin de récupérer l'huile et les copeaux dans les bacs dédiés 128 et 129, le fond du chariot 130 est muni de trous. Une goulotte solidaire du chariot peut être prévue pour guider les copeaux..

Egalement, le module d'usinage 110 dispose d'un système d'aspiration de vapeurs présente dans l'enceinte et qui est équipé d'une cheminée d'évacuation de vapeurs 140.

Pour faciliter le contrôle visuel de l'état de fonctionnement de chaque module d'usinage 110, on prévoit avantageusement un indicateur visuel de l'état de fonctionnement, tel qu'une lampe de signalisation 142 (voir les figures 1 à 3).

Le module d'usinage 110 comprend en outre un magasin de barres à usiner 127 situé dans l'enceinte 114, à l'arrière de l'ensemble d'usinage 120. Ce magasin de barres à usiner 127 alimente l'ensemble d'usinage 120 barre par barre, à la façon d'un magasin de cartouches d'armes. Ainsi, ce magasin de barres à usiner 127 forme un ravitailleur pour l'ensemble d'usinage 120, en alimentant le support de pièce 123 avec la matière brute, par l'arrière du module d'usinage 110 (par la droite sur les figures). Des séries de barres de différents diamètres, et/ou de différentes matières déjà prêtes permettent à l'opérateur de recharger le magasin 127 de façon rapide et facile.

Les barres présentent de préférence une longueur inférieure à 1 mètre. Avec des barres à usiner assez courtes, on réduit non seulement l'encombrement au sol du magasin 127, mais on contribue de plus à réduire les vibrations lors de l'usinage de la barre, ce qui est un gage de stabilité du procédé d'usinage et donc d'une bonne qualité d'usinage. De plus, la courte taille de la barre permet de faire avancer la barre sans guidage particulier jusqu'au support de pièce 123.

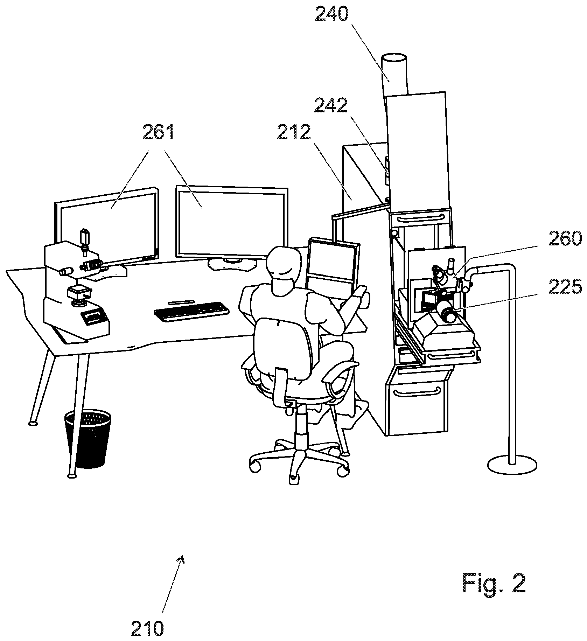

La figure 2 illustre un module de mise au point 210 selon un mode de réalisation de l'invention. De nombreux éléments de ce module de mise au point sont similaires ou identiques à ceux du module d'usinage 110 et ne seront pas décrits plus en détail. L'unité de mise au point 210 comporte notamment un chariot 230 mobile dans le capot de protection 212 et permettant d'extraire ou d'introduire les éléments d'usinage, notamment une broche similaire à la broche 124 avec son support de pièce, une contre-broche 225 et les porte-outils détaillés plus loin. L'élément 240 est une cheminée pour l'évacuation des vapeurs, 242 est un feu lumineux signalant la marche ou l'arrêt du module de mise au point. Tous les autres éléments du module d'usinage décrits en relation avec la figure 1 peuvent être présents dans le module de mise au point. Ce module n'étant cependant pas destiné à la production en série de grandes quantités de pièces, il est cependant possible de simplifier certains éléments destinés à la production rapide ou de grandes séries ; par exemple, il est possible de prévoir un ravitailleur plus petit ou moins rapide, des bacs de récupération d'huile et d'air plus petits, etc.

Le module de mise au point 210 comporte par ailleurs au moins une caméra de haute résolution et/ou au moins un capteur, dont le module d'usinage 110 est dépourvu, afin de mettre au point l'usinage sur ce module et de vérifier la qualité des pièces produites. Ce capteur peut par exemple comporter un palpeur, un rugosimètre, un calibre, une colonne de mesure de hauteur, un système de vision basé sur une ou plusieurs caméras haute résolution et/ou haute fréquence, etc. Les résultats de mesure peuvent être affichés sur un ou plusieurs écrans 261.

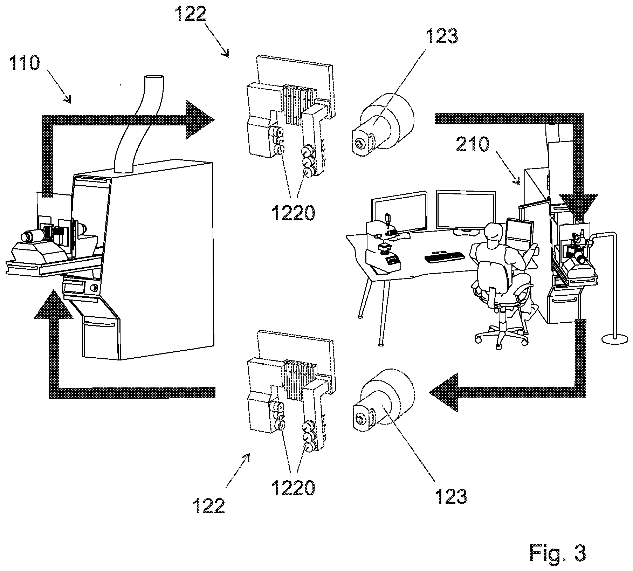

Les outils sont répartis en groupes d'outils 1220, chaque groupe d'outils comportant un ou plusieurs outils les uns à côtés des autres. Un ou plusieurs groupes d'outils sont solidaires d'un même porte-outil 122. La machine peut comporter plusieurs porte-outils 122. Au moins un de ces porte-outils est monté de manière amovible, par exemple à l'aide de goupilles, sur un chariot mobile (dit peigne) du module de mise au point 210 respectivement du module d'usinage 110. Il est ainsi possible de transférer un porte-outil 122 d'un module à l'autre, comme illustré schématiquement sur la figure 3. De la même façon, le support de pièce 123 est monté de manière amovible, à l'aide d'un dispositif de fixation 1232, sur le module de mise au point 210 et sur le module d'usinage 110, de manière à pouvoir être transférés d'un module à l'autre. Des dispositifs de correction de position permettent avantageusement de compenser la position relative du ou de chaque porte-outil par rapport au support de pièce, comme on le verra plus loin.

Un ou plusieurs outils peuvent être montés de manière amovible sur le porte-outil correspondant. La position relative de chaque outil par rapport au porte-outil 122, et/ou la position de l'arête de coupe, peut être mesurée et stockée numériquement, afin par exemple d'appliquer une correction numérique appropriée en cas d'erreur de placement, au moyen d'éléments de mesure et de correction connus en soi et distincts des moyens de compensation de la position du porte-outil.

Le support de pièce 123 peut comporter par exemple un canon, c'est-à-dire un élément capable de guider une barre de matière tenue par la broche, un mandrin, ou une pince capable de tenir elle-même la matière. Avantageusement, le support de pièce comporte un canon convertible en pince.

Après la mise au point d'un plan d'usinage, le porte-outil amovible 122 et le support de pièce amovible 123 peuvent donc être transférés depuis le module de mise au point 210 vers le module d'usinage 110. On garantit ainsi que l'usinage sera effectué avec le porte-outil et avec le support de pièce qui ont permis d'obtenir les qualités et les résultats testés et approuvés lors de la mise au point. Des défauts liés au changement de porte-outils ou au changement de support de pièce sont ainsi évités. Avantageusement, un porte-outil et un support de pièce utilisés pour la mise au point d'une pièce particulière sont associés à cette pièce et à son programme de pièce dans un inventaire, et utilisés uniquement pour l'usinage de cette pièce ; ce kit est stocké entre deux séries d'usinage de cette pièce.

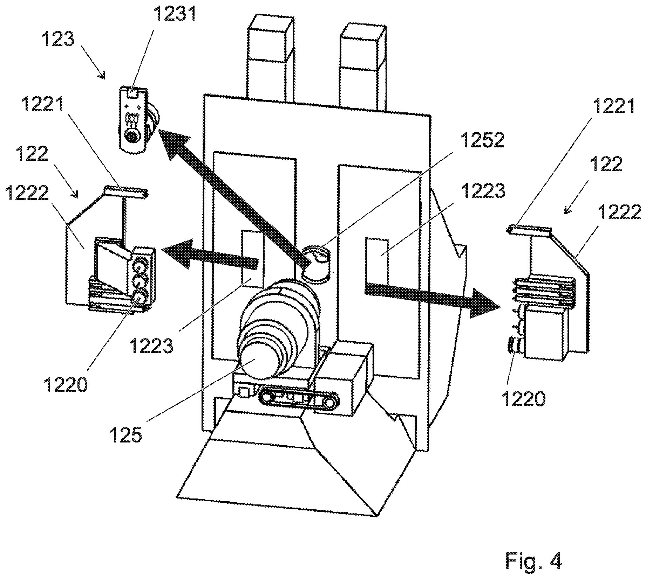

La figure 4 illustre schématiquement le montage de deux porte-outils 122 et d'un support de pièce 123 sur un module, par exemple sur un module de mise au point ou sur un module d'usinage. Chaque porte-outil 122 est fixé sur un chariot (peigne) du module 110 respectivement 210 au moyen d'un dispositif de fixation 1223, de manière à pouvoir le déplacer et à corriger sa position de manière motorisée. Les erreurs de positionnement du porte-outil 122 par rapport au chariot, ou les différences de positionnement par rapport au positionnement sur la machine de mise au point, sont ainsi compensées en modifiant de manière correspondante le déplacement du chariot.

Chaque porte-outil 122 comporte en outre une référence de positionnement 1221, par exemple mais sans limitation une cible optique montée sur un support de cible 1222, comme on le verra plus loin. On prévoira avantageusement plusieurs références de positionnement distinctes lorsque la machine comporte plusieurs porte-outils 122 sur plusieurs chariots (peignes). De la même manière, le support de pièce 123 est monté au moyen d'un dispositif de fixation 1232 et comporte également une référence de positionnement 1231, par exemple une autre cible optique détaillée plus bas. Le positionnement relatif des références de positionnement lié à chaque porte-outil et au support de pièce peut être contrôlé, par exemple au moyen d'un système de vision lié au bâti et qui permet de mesurer la distance selon les axes x et y entre les références de positionnement 1221 et 1231. Dans un mode de réalisation avantageux, le système commande un déplacement du chariot porte-outil selon une direction prédéterminée et mesure la différence Thêta entre la direction de déplacement effective mesurée sur l'image et la direction de consigne. Il est ainsi possible de compenser les erreurs d'orthogonalité des axes x,y.

Les erreurs de positionnement et de direction de déplacement ainsi mesurées sont compensées, par exemple au moyen des axes de ce porte-outil, afin d'obtenir lors de l'usinage un positionnement et une orientation relatifs des porte-outils et du support de pièce correspondant aux valeurs utilisées lors de la mise au point.

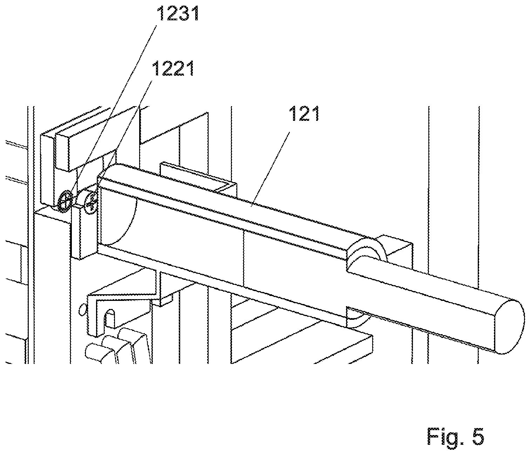

La figure 5 illustre une vue en perspective et partiellement en coupe des deux références de positionnement 1221 et 1231 liés respectivement au porte-outil et au support de pièce et superposés lors de leur montage sur l'un des modules 110 ou 210. Un dispositif de contrôle de positionnement 121 fixe et lié au bâti du module 110 respectivement 210 permet de vérifier le positionnement relatif correct entre les deux cibles 1221, 1231, et de compenser ce positionnement en cas d'erreur ou de différence par rapport au positionnement utilisé sur la machine de mise au point. Le dispositif de contrôle de positionnement 121 peut être constitué par une caméra munie d'un objectif de type microscope, ou un système optique capable de saisir une image des différentes cibles optiques 1221, 1231 superposées, afin de vérifier leur positionnement relatif. Un système informatique de vision permet de mesurer la distance x,y et l'erreur de direction de déplacement Thêta entre les cibles 1221 et 1231, afin d'appliquer une compensation correspondante.

Il est aussi possible, bien que moins avantageux, de prévoir un dispositif de contrôle de positionnement, par exemple une caméra, solidaire d'un porte-outil ou du support de pièce. Cette solution impose cependant un dispositif de contrôle par porte-outil ou par support.

De la même façon, il est aussi possible de prévoir une cible liée au support de pièce sur la contre-broche 125, et une cible liée à un ou plusieurs porte-outils en contre-opération, afin de contrôler le positionnement relatif de ces éléments et/ou relativement au porte-pièce principal 123.

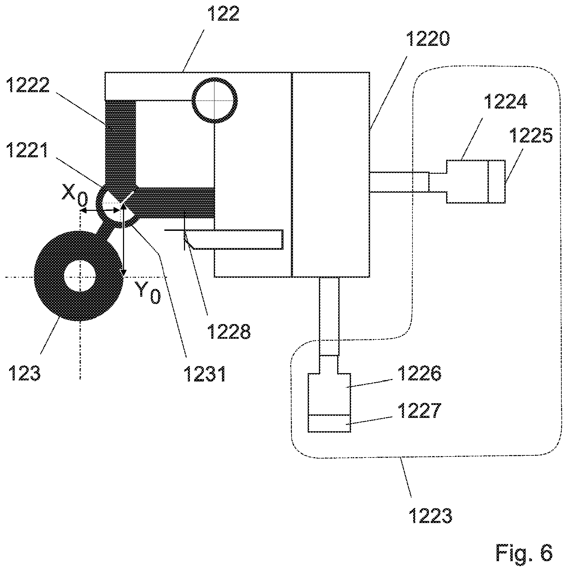

La figure 6 illustre de manière schématique la superposition de la cible 1231 associée au support de pièce 123 (par exemple un canon ou une broche) et de la ou des cibles 1221 associées à un ou plusieurs porte-outils 122. Comme on le voit, la cible 1231 associée au support de pièce est montée de manière décentrée par rapport au canon 123, l'axe de cette cible étant néanmoins parallèle à celui du canon. De la même manière, la cible 1221 montée sur chaque porte-outil 122 est déportée au moyen des supports de cible 1222. Le dispositif de correction de position du porte-outil comporte un moteur 1224 muni d'un encodeur 1225 qui permet de corriger la position xₘ de chaque porte-outil selon l'axe x, afin de déplacer le porte-outil lors de l'usinage en tenant compte d'éventuelles erreurs de positionnement en x des cibles 1221-1231. De la même manière, un moteur 1226 muni d'un encodeur 1227 permet de modifier la position yₘ selon l'axe y de chaque porte-outil, afin de corriger d'éventuelles erreurs de positionnement en y des cibles 1221-1231. L'élément 1220 est un groupe d'outils sur le porte-outil déplaçable en x et en y, tandis que la pointe d'un des outils montée sur ce porte-outil est indiquée par la référence 1228. Comme indiqué, la position de cette pointe par rapport à une référence du porte-outil peut être mesurée et stockée informatiquement. Une correction d'orientation dans le plan x-y peut aussi être envisagée.

Les cibles 1221, 1231 peuvent comporter par exemple des motifs en croix ou en étoile, ou d'autres motifs facilitant la vérification de l'alignement des cibles superposés selon les axes linéaires X et Y, ainsi que la direction Thêta de déplacement de la cible 1231 dans un référentiel lié au support de pièce. Ces motifs peuvent par exemple être imprimés par photolithographie sur un substrat de verre. Il est aussi possible d'imprimer une identification unique de chaque cible, par exemple un numéro de série, un code-barre, un datagramme, etc, afin d'identifier aisément chaque cible et donc le porte-outil respectivement le support de pièce associé à cette cible, et donc de s'assurer qu'une pièce particulière est bien usinée avec le porte-outil et le support de pièce associé. L'identification unique de porte-outil peut aussi être utilisée pour retrouver dans la mémoire informatique de la commande numérique 1211 les paramètres associés à ce porte-outil, par exemple les valeurs d'offset, de zéros etc.

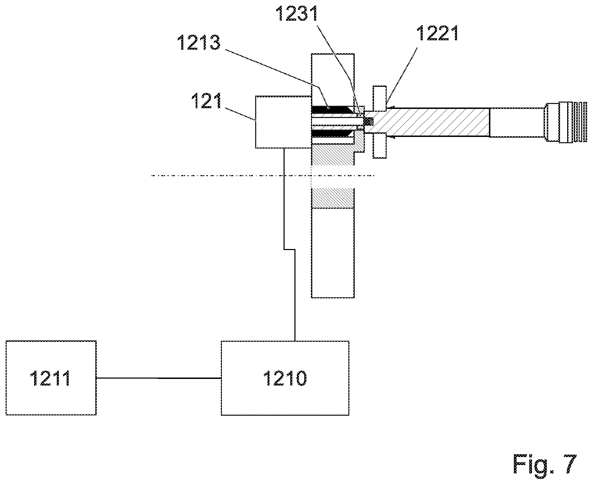

La figure 7 illustre schématiquement un mode de réalisation d'un système de vérification de positionnement. Dans cet exemple, le dispositif de contrôle de positionnement comporte un objectif de type microscope 1213 et une caméra CCD 121 d'un côté des cibles 1221, 1231, et une illumination 1212 de l'autre côté des cibles. La lumière générée par l'illumination 1212 traverse les cibles superposées et atteint la caméra CCD 121 qui capture une image ou une séquence d'image agrandies grâce à l'objectif 1213. Un module de vision 1210, par exemple un programme informatique, traite les images capturées par la caméra CCD afin de vérifier l'alignement des cibles. Les résultats fournis par ce module peuvent être transmis à la commande numérique 1211 qui commande le module de mise au point respectivement le module d'usinage, et utilisés pour commander les moteurs 1226, 1224 afin de déplacer le ou les porte-outils durant l'usinage en compensant l'erreur observée. Un mécanisme manuel de correction de position, par exemple à l'aide de vis micrométriques, peut aussi être mis en oeuvre. Dans une variante, les erreurs de position dans le module de mise au point ne sont pas corrigées, ou pas entièrement corrigées, mais stockées en relation avec les cibles concernées, afin de reproduire cette erreur lors de la production sur le module d'usinage.

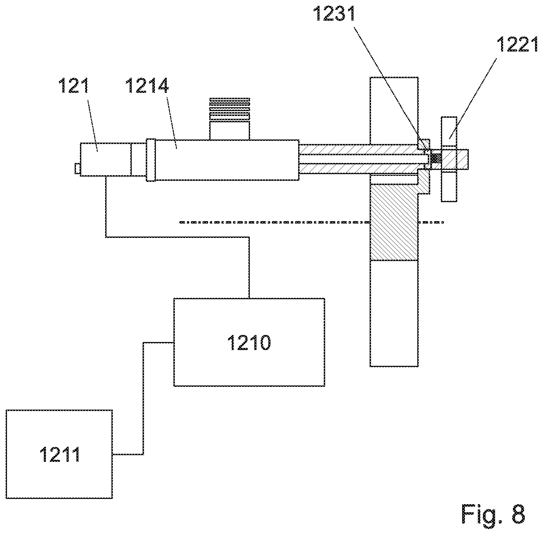

La figure 8 illustre schématiquement un autre mode de réalisation d'un système de vérification de positionnement. Dans cet exemple, le dispositif de contrôle de positionnement comporte un objectif de type microscope 1214 avec illumination coaxiale, et une caméra CCD 121 du même côté par rapport aux cibles 1221, 1231. La lumière générée par l'illumination est réfléchie par les cibles superposées et atteint la caméra CCD 121 qui capture une image ou une séquence d'image agrandies grâce à l'objectif 1214. Comme ci-dessus, un module de vision 1210, par exemple un programme informatique, traite les images capturées par la caméra CCD afin de vérifier le positionnement des cibles et d'effectuer ou de mémoriser une correction via la commande numérique 1211.

D'autres références de positionnement pourraient être imaginés pour vérifier le positionnement du ou des porte-outils relativement au support de pièce. A titre d'exemple non limitatif, des systèmes capacitifs, inductifs, magnétorésistifs, ou des palpeurs mécaniques pourraient être mis en œuvre dans ce but.

### Numéros de référence employés sur les figures

- 110: Module d'usinage
- 112, 212: Capot de protection
- 112a: Paroi latérale
- 112b: Paroi latérale
- 112c: Paroi supérieure
- 112d: Paroi inférieure liée au bâti
- 112e: Paroi arrière
- 112f: Paroi avant
- 114: Enceinte
- 120: Ensemble d'usinage
- 121: Dispositif de contrôle de positionnement
- 1210: Module de vision
- 1211: Commande numérique
- 1212: Illumination
- 1213: Objectif type microscope
- 1214: Objectif avec illumination coaxiale
- 122: Porte-outil amovible
- 1220: Groupe d'outils
- 1221: Référence de positionnement du porte-outil, par exemple cible
- 1222: Support de cible
- 1223: Dispositif de fixation du porte-outil
- 1224: Dispositif de correction de position en x du porte-outil (moteur)
- 1225: Encodeur du moteur 1224
- 1226: Dispositif de correction de position en y du porte-outil (moteur)
- 1227: Encodeur du moteur 1226
- 1228: Pointe d'un des outils
- 123: Support de pièce (canon, mandrin et/ou pince)
- 1231: Référence de positionnement du support de pièce, par exemple cible
- 1232: Dispositif de fixation de support de pièce
- 124: Broche
- 125, 225: Contre-broche
- 126: Base de support
- 127: Magasin de barres à usiner
- 128, 228: Bac à copeaux
- 129: Bac à huile
- 130, 230: Chariot mobile
- 132: Rails de guidage
- 140, 240: Cheminée d'évacuation de vapeurs
- 142, 242: Lampe de signalisation
- 210: Unité de mise au point
- 260: Capteur ou caméra
- 261: Ecrans

## Revendications

1. Système d'usinage de pièces comprenant un module de mise au point (210) et un module d'usinage (110) pour la production de pièces, le module de mise au point (210) comprenant :
* au moins un premier dispositif de fixation (1223) de porte-outil (122) pour fixer au moins un porte-outil (122) de manière amovible et au moins un premier dispositif de fixation (1232) de support de pièce (123) pour fixer un support de pièce (123) de manière amovible, ledit module d'usinage (110) comprenant
* au moins un deuxième dispositif de fixation (1223) de porte-outil (122) pour fixer au moins un porte-outil (122) de manière amovible et au moins un deuxième dispositif de fixation (1232) de support de pièce (123) pour fixer un support de pièce (123) de manière amovible,
**caractérisé en ce que**
* ledit module de mise au point (210) comprend en outre un premier dispositif de contrôle de positionnement (121) pour contrôler le positionnement dudit au moins un porte-outil (122) par rapport audit support de pièce (123), et **en ce que**
* ledit module d'usinage (110) comprend en outre un deuxième dispositif de contrôle de positionnement (121) permettant de vérifier le positionnement dudit au moins un porte-outil (122) par rapport audit support de pièce (123),
de manière à ce que le porte-outil (122) et le support de pièce (123) puissent tous deux être transférés après la mise au point depuis le module de mise au point vers le module d'usinage, le deuxième dispositif de contrôle de positionnement (121) permettant ainsi de garantir sur le module d'usinage (110) un positionnement entre ledit au moins un porte outil (122) et ledit support de pièce (123) identique à celui appliqué entre ledit au moins un porte-outil (122) et ledit support de pièce (123) lors de la mise au point sur le module de mise au point (210).

2. Système selon la revendication 1, dans lequel ledit premier dispositif de contrôle de positionnement (121) fournit des valeurs de référence de la position relative entre le au moins un porte-outil (122) par rapport audit support de pièce (123).

3. Système selon l'une des revendications 1 à 2, ledit premier dispositif de contrôle de positionnement (121) et ledit deuxième dispositif de contrôle de positionnement (121) permettant de vérifier le positionnement du porte-outil et du support de pièce au moins dans un plan X-Y.

4. Système selon l'une des revendications 1 à 3, le porte-outil (122) permettant de fixer plusieurs outils de manière amovible.

5. Système selon la revendication 4, le premier et le deuxième dispositif de fixation de porte-outil (1223) permettant de fixer un porte-outil (122) de manière amovible sur un chariot mobile (130, 230).

6. Système selon l'une des revendications 1 à 5, le module de mise au point (210) comportant des moyens pour mesurer et mémoriser la distance du porte-outil (122) par rapport à une référence liée au support de pièce (123).

7. Système selon l'une des revendications 1 à 6, le module de mise au point (210) comportant des moyens pour mesurer la direction de déplacement du porte-outil (122) dans un référentiel lié au support de pièce (123).

8. Système selon la revendication 6, le module d'usinage (110) comportant des moyens pour mesurer la distance du porte-outil par (122) rapport à une référence liée au support de pièce (123) et pour compenser une différence par rapport à ladite distance dudit porte-outil (122) par rapport à ladite référence liée au support de pièce (123), mesurée sur le module de mise au point, afin de garantir un positionnement relatif du porte-outil (122) et du support de pièce (123) identique à celui appliqué lors de la mise au point sur le module de mise au point.

9. Système selon l'une des revendications 7 à 8, le module d'usinage (110) comportant des moyens pour mesurer la direction de déplacement du porte-outil (122) dans un référentiel lié au support de pièce (123) et pour compenser une différence par rapport à la direction mesurée sur le module de mise au point.

10. Système selon l'une des revendications 1 à 9, le module d'usinage (110) comportant en outre des dispositifs de correction de position aptes à compenser la position relative du porte-outil (122) par rapport au support de pièce (123).

11. Système selon la revendication 2 et la revendication 10, dans lequel lesdits dispositifs de correction du module d'usinage (110) sont aptes à permettre d'obtenir un positionnement et une orientation relatifs du porte-outil (122) et du support de pièce (123) correspondant aux valeurs de référence du module de mise au point (210).

12. Système selon l'une des revendications 1 à 11, ledit module de mise au point (210) comportant une caméra (260) ou un capteur de haute résolution dont le module d'usinage (110) est dépourvu, afin de mettre au point l'usinage sur ledit module de mise au point (210).

13. Système selon l'une des revendications 1 à 12, comportant des capteurs (260) et/ou des systèmes de mesure pour aider à la mise au point.

14. Système selon l'une des revendications 1 à 13, dans lequel ledit deuxième dispositif de contrôle de positionnement (121) est agencé pour permettre de vérifier que le positionnement relatif du support de pièce (123) et du porte-outil (122) correspond à une valeur prédéfinie, et pour le modifier dans le cas contraire.

15. Procédé d'usinage de pièces à l'aide d'un module d'usinage (110) pour la production de pièces et d'un module de mise au point (210), comprenant : mise au point du procédé d'usinage au moyen dudit module de mise au point (210) ; transfert d'au moins un porte-outil (122) depuis le module de mise au point (210) vers un module d'usinage (110) destiné à la production ; **caractérisé en ce qu'**il comporte en outre les étapes suivantes :
transfert d'un support de pièce (123) depuis le module de mise au point (210) vers le module d'usinage (110) destiné à la production;
une étape de vérification du positionnement relatif du support de pièce (123) et du ou des porte-outils (122) sur le module de mise au point (210) et sur le module d'usinage (110), et ce afin de garantir sur le module d'usinage (110) un positionnement entre ledit au moins un porte-outil (122) et ledit support de pièce (123) identique à celui appliqué entre ledit au moins un porte-outil (122) et ledit support de pièce (123) lors de la mise au point sur le module de mise au point (210), et
usinage de pièces sur ledit module d'usinage (110) au moyen dudit support de pièce (123) et dudit porte-outil (122).

16. Procédé selon la revendication 15, dans lequel ladite étape de mise au point comporte la définition de valeurs de référence de la position relative entre ledit au moins un porte-outil (122) et ledit support de pièce (123).

17. Procédé selon la revendication 15 ou 16, dans lequel ladite étape de transfert vers ledit module d'usinage (110) comporte une correction de la position relative du porte-outil (122) par rapport au support de pièce (123).

18. Procédé selon les revendications 16 et 17, dans lequel ladite correction de position permet d'obtenir un positionnement et une orientation relatifs du porte-outil (122) et du support de pièce (123) correspondant aux valeurs de référence établies sur le module de mise au point (210).

## Patentansprüche

1. System zur Bearbeitung von Bauteilen, das ein Einstellmodul (210) und ein Bearbeitungsmodul (110) zur Erzeugung von Bauteilen enthält,
wobei das Einstellmodul (210) enthält:
* mindestens eine erste Befestigungsvorrichtung (1223) eines Werkzeugträgers (122), um mindestens einen Werkzeugträger (122) entfernbar zu befestigen, und mindestens eine erste Befestigungsvorrichtung (1232) eines Bauteilträgers (123), um einen Bauteilträger (123) entfernbar zu befestigen,
wobei das Bearbeitungsmodul (110) enthält:
* mindestens eine zweite Befestigungsvorrichtung (1223) eines Werkzeugträgers (122), um mindestens einen Werkzeugträger (122) entfernbar zu befestigen, und mindestens eine zweite Befestigungsvorrichtung (1232) eines Bauteilträgers (123), um einen Bauteilträger (123) entfernbar zu befestigen, **dadurch gekennzeichnet, dass**
* das Einstellmodul (210) außerdem eine erste Positioniersteuervorrichtung (121) zur Steuerung der Positionierung des mindestens einen Werkzeugträgers (122) bezüglich des Bauteilträgers (123) enthält, und dass
* das Bearbeitungsmodul (110) außerdem eine zweite Positioniersteuervorrichtung (121) enthält, die es ermöglicht, die Positionierung des mindestens einen Werkzeugträgers (122) bezüglich des Bauteilträgers (123) zu überprüfen,
damit der Werkzeugträger (122) und der Bauteilträger (123) beide nach der Einstellung vom Einstellmodul zum Bearbeitungsmodul übertragen werden können, wobei die zweite Positioniersteuervorrichtung (121) es so ermöglicht, auf dem Bearbeitungsmodul (110) eine Positionierung zwischen dem mindestens einen Werkzeugträger (122) und dem Bauteilträger (123) gleich derjenigen zu garantieren, die zwischen dem mindestens einen Werkzeugträger (122) und dem Bauteilträger (123) bei der Einstellung auf dem Einstellmodul (210) angewendet wird.

2. System nach Anspruch 1, wobei die erste Positioniersteuervorrichtung (121) Bezugswerte der relativen Position zwischen dem mindestens einen Werkzeugträger (122) bezüglich des Bauteilträgers (123) liefert.

3. System nach einem der Ansprüche 1 bis 2, wobei die erste Positioniersteuervorrichtung (121) und die zweite Positioniersteuervorrichtung (121) es ermöglichen, die Positionierung des Werkzeugträgers und des Bauteilträgers mindestens in einer Ebene X-Y zu überprüfen.

4. System nach einem der Ansprüche 1 bis 3, wobei der Werkzeugträger (122) es ermöglicht, mehrere Werkzeuge entfernbar zu befestigen.

5. System nach Anspruch 4, wobei die erste und die zweite Werkzeugträger-Befestigungsvorrichtung (1223) es ermöglichen, einen Werkzeugträger (122) entfernbar auf einem beweglichen Laufwagen (130, 230) zu befestigen.

6. System nach einem der Ansprüche 1 bis 5, wobei das Einstellmodul (210) Einrichtungen aufweist, um den Abstand des Werkzeugträgers (122) bezüglich eines mit dem Bauteilträger (123) verbundenen Bezugs zu messen und zu speichern.

7. System nach einem der Ansprüche 1 bis 6, wobei das Einstellmodul (210) Einrichtungen aufweist, um die Verschieberichtung des Werkzeugträgers (122) in einem mit dem Bauteilträger (123) verbundenen Bezugssystem zu messen.

8. System nach Anspruch 6, wobei das Bearbeitungsmodul (110) Einrichtungen aufweist, um den Abstand des Werkzeugträgers (122) bezüglich eines mit dem Bauteilträger (123) verbundenen Bezugs zu messen, und um eine Differenz bezüglich des Abstands des Werkzeugträgers (122) bezüglich des mit dem Bauteilträger (123) verbundenen Bezugs zu kompensieren, die auf dem Einstellmodul gemessen wird, um eine relative Positionierung des Werkzeugträgers (122) und des Bauteilträgers (123) gleich derjenigen zu garantieren, die bei der Einstellung auf dem Einstellmodul angewendet wurde.

9. System nach einem der Ansprüche 7 bis 8, wobei das Bearbeitungsmodul (110) Einrichtungen aufweist, um die Verschieberichtung des Werkzeugträgers (122) in einem mit dem Bauteilträger (123) verbundenen Bezugssystem zu messen, und um eine Differenz bezüglich der im Einstellmodul gemessenen Richtung zu kompensieren.

10. System nach einem der Ansprüche 1 bis 9, wobei das Bearbeitungsmodul (110) außerdem Positionskorrekturvorrichtungen aufweist, die die relative Position des Werkzeugträgers (122) bezüglich des Bauteilträgers (123) kompensieren können.

11. System nach Anspruch 2 und Anspruch 10, wobei die Korrekturvorrichtungen des Bearbeitungsmoduls (110) den Erhalt einer relativen Positionierung und einer relativen Ausrichtung des Werkzeugträgers (122) und des Bauteilträgers (123) erlauben können, die den Bezugswerten des Einstellmoduls (210) entsprechen.

12. System nach einem der Ansprüche 1 bis 11, wobei das Einstellmodul (210) eine Kamera (260) oder einen Sensor mit hoher Auflösung aufweist, die/den das Bearbeitungsmodul (110) nicht aufweist, um die Bearbeitung auf dem Einstellmodul (210) einzustellen.

13. System nach einem der Ansprüche 1 bis 12, das Sensoren (260) und/oder Messsysteme enthält, um die Einstellung zu unterstützen.

14. System nach einem der Ansprüche 1 bis 13, wobei die zweite Positioniersteuervorrichtung (121) eingerichtet ist, um es zu ermöglichen zu überprüfen, ob die relative Positionierung des Bauteilträgers (123) und des Werkzeugträgers (122) einem vordefinierten Wert entspricht, und um sie im gegenteiligen Fall zu ändern.

15. Verfahren zur Bearbeitung von Bauteilen mit Hilfe eines Bearbeitungsmoduls (110) zur Erzeugung von Bauteilen und eines Einstellmoduls (210), das enthält:
Einstellung des Bearbeitungsverfahrens mittels des Einstellmoduls (210);
Übertragung mindestens eines Werkzeugträgers (122) vom Einstellmodul (210) zu einem für die Erzeugung bestimmten Bearbeitungsmodul (110); **dadurch gekennzeichnet, dass** es außerdem die folgenden Schritte aufweist:
Übertragung eines Bauteilträgers (123) vom Einstellmodul (210) zum für die Erzeugung bestimmten Bearbeitungsmodul (110);
einen Schritt der Überprüfung der relativen Positionierung des Bauteilträgers (123) und des oder der Werkzeugträger(s) (122) auf dem Einstellmodul (210) und auf dem Bearbeitungsmodul (110), und dies, um auf dem Bearbeitungsmodul (110) eine Positionierung zwischen dem mindestens einen Werkzeugträger (122) und dem Bauteilträger (123) gleich derjenigen zu garantieren, die zwischen dem mindestens einen Werkzeugträger (122) und dem Bauteilträger (123) bei der Einstellung auf dem Einstellmodul (210) angewendet wird, und
Bearbeitung von Bauteilen auf dem Bearbeitungsmodul (110) mittels des Bauteilträgers (123) und des Werkzeugträgers (122).

16. Verfahren nach Anspruch 15, wobei der Schritt der Einstellung die Definition von Bezugswerten der relativen Position zwischen dem mindestens einen Werkzeugträger (122) und dem Bauteilträger (123) aufweist.

17. Verfahren nach Anspruch 15 oder 16, wobei der Schritt der Übertragung zum Bearbeitungsmodul (110) eine Korrektur der relativen Position des Werkzeugträgers (122) bezüglich des Bauteilträgers (123) aufweist.

18. Verfahren nach den Ansprüchen 16 und 17, wobei die Positionskorrektur es ermöglicht, eine relative Positionierung und Ausrichtung des Werkzeugträgers (122) und des Bauteilträgers (123) zu erhalten, die den auf dem Einstellmodul (210) erstellten Bezugswerten entsprechen.

## Claims

1. A workpiece machining system comprising a setting-up module (210) and a machining module (110) for producing workpieces,
the setting-up module (210) comprising:
* at least one first tool-holder (122) attachment device (1223) for removably attaching at least one tool-holder (122) and at least one first workpiece-carrier (123) attachment device (1232) for removably attaching a workpiece-carrier (123),
said machining module (110) comprising:
* at least one second tool-holder (122) attachment device (1223) for removably attaching at least one tool-holder (122) and at least one second workpiece-carrier (123) attachment device (1232) for removably attaching a workpiece-carrier (123),
**characterised in that**
* said setting-up module (210) further comprises a first positioning control device (121) for controlling the positioning of said at least one tool-holder (122) relative to said workpiece-carrier (123), and **in that**
* said machining module (110) further comprises a second positioning control device (121) adapted to check the positioning of said at least one tool-holder (122) relative to said workpiece-carrier (123),
such that the tool-holder (122) and the workpiece-carrier (123) can both be transferred after setting up from the setting-up module to the machining module, the second positioning control device (121) thus making it possible to ensure on said machining module (110) that the positioning between said at least one tool-holder (122) and said workpiece-carrier (123) is identical to that applied between said at least one tool-holder (122) and said workpiece-carrier (123) during setting up on the setting-up module (210).

2. The system as claimed in claim 1, wherein said first positioning control device (121) provides reference values for the relative positioning between said at least one tool-holder (122) and said workpiece-carrier (123).

3. The system as claimed in one of claims 1 to 2, wherein said first positioning control device (121) and said second positioning control device (121) are adapted to check the positioning of the tool-holder and the workpiece-carrier at least in a X-Y plane.

4. The system as claimed in one of claims 1 to 3, the tool-holder (122) allowing several tools to be attached in a removable manner.

5. The system as claimed in claim 4, the first and second tool-holder attachment devices (1223) allowing a tool-holder (122) to be removably attached to a movable slide (130, 230).

6. The system as claimed in one of claims 1 to 5, the setting-up module (210) comprising means for measuring and storing the distance of the tool-holder (122) with respect to a reference linked to the workpiece-carrier (123).

7. The system as claimed in one of claims 1 to 6, the setting-up module (210) comprising means for measuring the direction of movement of the tool-holder (122) in a reference frame linked to the workpiece-carrier (123).

8. The system as claimed claim 6, the machining module (110) comprising means for measuring the distance of the tool-holder (122) with respect to a reference linked to the workpiece-carrier (123) and for compensating for a difference with respect to said distance of the tool-holder (122) with respect to said reference linked to the workpiece-carrier (123), said distance being measured on the setting-up module, so as to ensure a relative positioning of the tool-holder (122) and the workpiece-carrier (123) which is identical to that applied during setting up on the setting-up module.

9. The system as claimed in one of claims 7 to 8, the machining module (110) comprising means for measuring the direction of movement of the tool-holder (123) in a reference frame linked to the workpiece-carrier and for compensating for a difference with respect to the direction measured on the setting-up module.

10. The system as claimed in one of claims 1 to 9, said machining module (110) comprising further position correction devices adapted to compensate for the relative position of the tool-holder (122) with respect to the workpiece-carrier (123).

11. The system as claimed in claim 2 and in claim 10, said position correction devices of the machining module (110) are adapted to obtain a relative positioning and orientation of the tool-holder (122) and of the workpiece-carrier (123) corresponding to the reference values of the setting-up module (210).

12. The system as claimed in one of claims 1 to 11, said setting-up module (210) comprising a camera (260) or a high-resolution sensor not provided on the machining module (110), in order to set up the machining on said setting-up module (210).

13. The system as claimed in one of claims 1 to 12, comprising sensors (260) and/or measurement systems for assisting with the setting up.

14. The system as claimed in one of claims 1 to 13, wherein said second positioning control device (121) is arranged in order to check that the relative positioning of the workpiece-carrier (123) and the tool-holder (122) corresponds to a predefined value, and to modify it if this is not the case.

15. A machining process for machining workpieces using a machining module (110) for producing workpieces and a setting-up module (210), comprising:
setting up the machining process by means of said setting-up module (210);
transferring at least one tool-holder (122) from the setting-up module (210) to a machining module (110) to be used for production;
**characterised in that** it further comprises the following steps:
transferring a workpiece-carrier (123) from the setting-up module (210) to a machining module (110) to be used for production;
checking the relative positioning of the workpiece-carrier (123) and the tool-holder or holders (122) on the setting-up module (210) and on the machining module (110), in order to ensure on said machining module (110) a positioning between said at least one tool-holder (122) and said workpiece-carrier (123) which is identical to that applied between said at least one tool-holder (122) and said workpiece-carrier (123) during setting up on the setting-up module (210), and
machining workpieces on said machining module (110) by means of said workpiece-carrier (123) and said tool-holder (122)

16. The machining process according to claim 15, wherein said setting up step comprises definition of reference values for the relative positioning between said at least one tool-holder (122) and said workpiece-carrier (123)

17. The machining process according to claim 15 or 16, wherein said transfer step to said machining module (110) comprises a correction of the relative position of the tool-holder (122) with respect to the workpiece-carrier (123).

18. The machining process according to claims 16 and 17, wherein said position correction allows to obtain a relative positioning and orientation of the tool-holder (122) and of the workpiece-carrier (123) that correspond to the reference values determined on the setting up module (210).
